**Europäisches Patentamt**

**European Patent Office**

**Office européen des brevets**

(11) Veröffentlichungsnummer: **0 478 830 A1**

# EUROPÄISCHE PATENTANMELDUNG

(21) Anmeldenummer: **90119020.7**

(51) Int. Cl.⁵: **E02D 19/18**

(22) Anmeldetag: **04.10.90**

(43) Veröffentlichungstag der Anmeldung:
**08.04.92 Patentblatt 92/15**

(84) Benannte Vertragsstaaten:
**AT BE CH DE ES FR GB IT LI NL SE**

(71) Anmelder: **Philipp Holzmann AG**
**Taunusanlage 1**
**W-6000 Frankfurt 1(DE)**

(72) Erfinder: **Wind, Heinz, Prof.-Dr.-Ing.**
**Kiefernweg 10**
**W-6242 Kronberg(DE)**

(74) Vertreter: **Schmidt-Evers, Jürgen, Dipl.-Ing. et al**
**Patentanwälte Mitscherlich, Gunschmann**
**Dr. Körber, Schmidt-Evers, Melzer, Dr. Schulz**
**Steinsdorfstrasse 10**
**W-8000 München 22(DE)**

(54) **Abdichtungsbauwerk aus einer vertikalen Schlitzwand mit einer darin eingebrachten Dichtwandmasse.**

(57) Die Erfindung betrifft ein Abdichtungsbauwerk aus einer vertikalen Schlitzwand 2 mit einer darin eingebrachten Dichtwandmasse unter Verwendung von Glas als Material für die Schlitzwand 2, wobei zur Lösung der Aufgabe, einen einfachen Aufbau, eine einfache Einbringung in die Schlitzwand zu verwirklichen und trotzdem eine erhöhte Dichtheit zu gewährleisten, der Dichtwandmasse schadstoffresistente Glasteile und dazugehörige schadstoffresistente Bindemittel zugesetzt sind bzw. die Dichtwandmasse aus schadstoffresistenten Glasteilen und dazugehörigem schadstoffresistentem Bindemittel zusammengesetzt ist.

EP 0 478 830 A1

Die Erfindung betrifft ein Abdichtungsbauwerk, bestehend aus einer vertikalen Schlitzwand mit einer darin eingebrachten Dichtwandmasse unter Verwendung von Glas als Material für die Schlitzwand.

Die Umschließung von Mülldeponien mit Dichtwänden zum Schutz des Grundwassers vor kontaminierten Sickerwässern ist eine bekannte Technik. Diese Dichtwände werden meist als Schmalwände oder Schlitzwände mit Dichtwandmassen ausgeführt. Die dafür verwendeten Dichtmassen-Zement-, Bentonit-Suspension mit verschiedenen Zusätzen - schränken die Durchlässigkeiten zwar ein, bei großen Umschließungsflächen und langen Zeiträumen durchdringen trotzdem noch beträchtliche Mengen an Schadstoffen die Dichtwände. Zur weiteren Verringerung der Durchlässigkeit werden Dichtungsbahnen aus Kunststoffen eingesetzt, die jedoch auch nicht diffusionssicher und korrosionsbeständig gegenüber bestimmten aggressiven Sickerwässern sind. Die Dichtigkeit und Widerstandsfähigkeit der Dichtwandmasse läßt sich steigern, wenn der Feststoffanteil erhöht und der Anteil an Zement reduziert oder gänzlich eliminiert wird. Der Feststoffanteil läßt sich durch inerte Quarzsand- und -kiese und geeignete, gering empfindliche Tone erhöhen und ersetzen.

Aus der EP 0298 283 A1 ist ein in einen geologischen Untergrund eingebrachtes Bauwerk aus einer vertikalen Schlitzwand und einer darin angeordneten Dichtwand bekannt, wobei die Schlitzwand mit einer Schlitzwandmasse ausgefüllt und die Dichtwand in die Schlitzwandmasse eingebaut ist, wonach die Erfindung darin besteht, daß die Dichtwand aus Glasscheiben aufgebaut ist, die unter Zwischenschaltung von Abstandshaltern mit Abstandszwischenraum angeordnet sind, wobei auch die Abstandszwischenräume mit der Schlitzwand - masse ausgefüllt sind.

Die Abdichtung an den Fugen der einzelnen Glasplatten kann dadurch vorgenommen werden, daß die Einzelglasscheiben der Mehrscheiben-Glaseinheiten an den vertikalen Fugen unter Zwischenschaltung eines Dichtungsmittels aus Gummi oder Kunststoff aneinander gestoßen sind und der dadurch gebildete Fugenhohlraum mit einer bituminösen Vergußmasse ausgegossen ist.

Die Einzelglasscheiben werden weiter an den horizontalen Fugen unter Zwischenschaltung eines Dichtungsbandes aus Gummi oder Kunststoff, welches die Breite der Mehrscheiben-Glaseinheiten aufweist, aufeinandergesetzt.

Diese Abdichtung ist recht kompliziert im Aufbau und in der Einbringung in die Fugen der eingebauten Glasscheiben und reicht trotzdem in ihrer Dichtwirkung nicht immer aus, insbesondere nicht an den Kreuzungsstellen der Fugen. Das ist besonders wichtig, weil solche Schlitzwände häufig in Mülldeponien verwendet werden, wo es darauf ankommt, abgesetzte und durch Regen ausgeschwemmte Giftstoffe vom Untergrund fernzuhalten.

Der Erfindung liegt daher die Aufgabe zugrunde, ein Abdichtungsbauwerk der eingangs genannten Art zu schaffen, das einfach im Aufbau und in der Einbringung in die Schlitzwand ist und trotzdem eine erhöhte Dichtheit gewährleistet.

Die erfindungsgemäße Lösung dieser Aufgabe besteht darin, daß der Dichtwandmasse schadstoffresistente Glasteile und dazugehörige schadstoffresistente Bindemittel zugesetzt sind bzw. daß die Dichtwandmasse aus schadstoffresistenten Glasteilen und dazugehörigen schadstoffresistentem Bindemittel zusammengesetzt ist.

Aufgrund seiner Beständigkeit und praktisch absoluten Dichtigkeit bietet das schadstoffresistente Glas erhebliche Vorteile, da es in der Glasindustrie in erheblichen Mengel als Reststoff in den einzelnen Produktionsabläufen in Form von Scherben bis hin zu den Stäuben anfällt. Anhand der Kornverteilungskurve werden die geeignetsten Bruchstückgrößen zu einer Packdichte mit dem geringsten Porenvolumen zusammengestellt. Die Porenvolumen werden durch ein schadstoffresistentes Bindemittel gefüllt.

Diese Dichtwandmasse kann dann in den üblichen Mischanlagen zu einer pumpbaren Konsistenz aufbereitet werden. Aufgrund der hohen Dichte wird auch die mit Boden angereicherte Dichtwandmasse, z.B. Bentonitsuspension sicher nach oben verdrängt.

Weitere vorteilhafte Merkmale der Erfindung ergeben sich aus den Unteransprüchen.

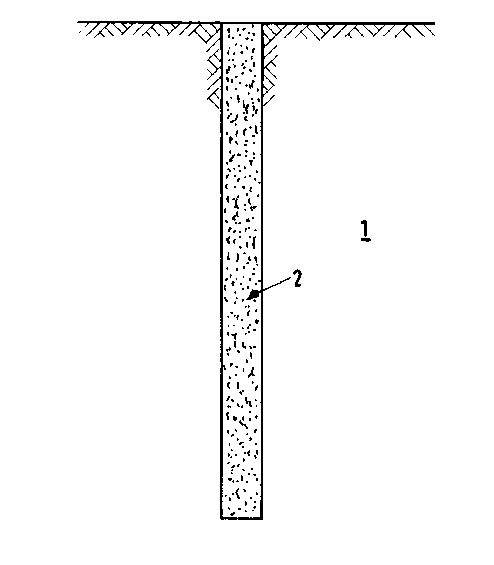

In der Zeichnung ist eine Ausführungsform der Erfindung beispielsweise dargestellt.

Die einzige Figur zeigt schematisch den Aufbau eines erfindungsgemäßen Abdichtungsbauwerks. Darin ist 1 der Baugrund, in den die Schlitzwand 2, bestehend aus hauptsächlich oder ausschließlich schadstoffresistentem Glas und dazugehörigem schadstoffresistendem Bindemittel und ohne weitere Einbauten eingebracht ist.

**Patentansprüche**

1. Abdichtungsbauwerk aus einer vertikalen Schlitzwand mit einer darin eingebrachten Dichtwandmasse unter Verwendung von Glas als Material für die Schlitzwand,
dadurch gekennzeichnet,
daß der Dichtwandmasse schadstoffresistente Glasteile und dazugehörige schadstoffresistente Bindemittel zugesetzt sind bzw. daß die Dichtwandmasse aus schadstoffresistenten Glasteilen und dazugehörigem schadstoffresistentem Bindemittel zusammengesetzt ist.

2. Abdichtungsbauwerk nach Anspruch 1,
   dadurch gekennzeichnet,
   daß das schadstoffresistente Glas aus Bruchglas besteht.

3. Abdichtungsbauwerk nach Anspruch 2,
   dadurch gekennzeichnet,
   daß das Bruchglas gleichmäßig gemahlen ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-2 729 985 (OHBAYASHI-GUMI) <br> * Seite 7, Zeile 23 - Seite 26, Zeile 18; Abbildungen 8,9 * <br> – – – | 1-3 | E 02 D 19/18 |
| A | DE-A-1 939 714 (LEPPER) <br> * Seite 1, Zeile 16 - Seite 2, Zeile 25; Ansprüche 1,2 * <br> – – – – – | 1-3 | |
| | | | **RECHERCHIERTE SACHGEBIETE (Int. Cl.5)** <br><br> E 02 D <br> C 04 B |

Der vorliegende Recherchenbericht wurde für alle Patentansprüche erstellt

| Recherchenort | Abschlußdatum der Recherche | Prüfer |
|---|---|---|
| Den Haag | 15 Mai 91 | TELLEFSEN J.J. |